# EUROPÄISCHE PATENTSCHRIFT

(11) **EP 4 445 888 B1**
(45) Veröffentlichungstag und Bekanntmachung des Hinweises auf die Patenterteilung: **20.05.2026**
(21) Anmeldenummer: 24170084.8
(22) Anmeldetag: 12.04.2024
(51) Int. Cl.: A61G 1/02, B60B 33/00

(54) **ROLLENVORRICHTUNG, PATIENTENTRANSPORTVORRICHTUNG UND ROLLENSYSTEM**
ROLLER DEVICE, PATIENT TRANSPORT DEVICE AND ROLLER SYSTEM
DISPOSITIF DE ROULEMENT, DISPOSITIF DE TRANSPORT DE PATIENT ET SYSTÈME DE ROULEMENT

(30) Priorität: 13.04.2023 DE 102023109295
(43) Veröffentlichungstag der Anmeldung: 16.10.2024
(73) Patentinhaber: StarMed GmbH, 88719 Stetten (DE)
(72) Erfinder: Stern, René, 88719 Stetten am Bodensee (DE)
(74) Vertreter: DREISS Patentanwälte PartG mbB

(56) Entgegenhaltungen:
- EP-B1- 1 318 028
- EP-B1- 2 946 757
- JP-B2- 6 155 120
- US-A1- 2013 127 233

## Beschreibung

Die Erfindung betrifft eine Rollenvorrichtung, eine Patiententransportvorrichtung und ein Rollensystem.

Hubschrauberlandeplätze von Kliniken oder Schiffen, insbesondere Dachlandeplätze oder Decklandeplätze, werden häufig mit geriffelten Aluminiumplatten oder Gitterelementen, beispielsweise Gitterrosten, ausgerüstet. Insbesondere werden derartige Elemente oft als Untergrund für eine Auffahrtsrampe, die zu einer Landeplattform des Hubschrauberlandeplatzes führt, verwendet. Dabei verhindert die Riffelung der Aluminiumplatten oder das Gitter der Gitterelemente ein Rutschen, insbesondere bei Nässe. Daher wird eine Rutschfestigkeit durch die Riffelung und/oder durch das Gitter verbessert.

Rollenvorrichtungen werden häufig bei Patiententransportvorrichtungen mit einer Patientenaufnahme zum Rollen über einen Untergrund verwendet. Die Patientenaufnahme kann eine Liegefläche oder eine Sitzfläche für einen Patienten umfassen oder sein. Die Patiententransportvorrichtung kann eine Liege, ein Bett, insbesondere ein Krankenhausbett, ein Sitz, insbesondere ein Rollstuhl, ein Tisch, insbesondere ein Hubtisch oder ein Scherenhubtisch, oder eine Trage, insbesondere eine Krankentrage, eine Trageliege oder ein Tragestuhl, umfassen oder sein.

Beim Rollen der Patiententransportvorrichtung mittels Rollenvorrichtungen über geriffelte Aluminiumplatten oder Gitterelemente entstehen aufgrund den Riffelungen der Aluminiumplatten oder den Gittern der Gitterelemente typischerweise Stöße, welche auf die Patientenaufnahme und damit auf einen mit der Patientenaufnahme aufgenommenen Patienten übertragen werden.

EP 2 946 757 B1, US 2013 / 127 233 A1, JP 6 155 120 B2 und EP 1 318 028 B1 offenbaren jeweils eine Rollenvorrichtung mit Merkmalen des Anspruchs 1.

Es ist Aufgabe der vorliegenden Erfindung, eine Rollenvorrichtung für eine Patiententransportvorrichtung bereitzustellen, die verbesserte Eigenschaften hat, insbesondere die beim Rollen der Rollenvorrichtung den Komfort für den Patienten erhöht. Weiter ist es Aufgabe der vorliegenden Erfindung, eine Patiententransportvorrichtung und ein Rollensystem bereitzustellen, die jeweils eine derartige Rollenvorrichtung umfassen.

Die Erfindung löst diese Aufgaben durch die Merkmale des Anspruchs 1, des Anspruchs 8 und des Anspruchs 9. Vorteilhafte Ausgestaltungen und Weiterbildungen der Erfindung ergeben sich aus den abhängigen Ansprüchen.

Eine erfindungsgemäße Rollenvorrichtung für eine Patiententransportvorrichtung mit einer Patientenaufnahme zum Rollen der Patiententransportvorrichtung über einen Untergrund weist eine Radhalterung, ein Laufrad und ein Stützrad auf. Die Radhalterung ist um eine Schwenkachse drehbar oder fest mit der Patientenaufnahme verbindbar. Das Laufrad ist von der Radhalterung um eine Laufradachse drehbar gehalten. Das Stützrad ist von der Radhalterung um eine Stützradachse drehbar gehalten. Die Laufradachse und die Stützradachse sind parallel und versetzt zueinander angeordnet.

Vorteilhafterweise wird durch die parallele und versetzte Anordnung der Laufradachse und der Stützradachse zueinander ein Eintauchen des Laufrads in einen Zwischenraum zwischen zwei benachbarter Riffel einer geriffelten Aluminiumplatte oder in einen Durchbruch eines Gitters der Gitterelemente reduziert oder ganz vermieden. Dadurch wird die Entstehung von Stößen beim Rollen der Rollenvorrichtung über geriffelte Aluminiumplatten oder Gitterelemente reduziert oder ganz vermieden. Somit wird beim Rollen der Rollenvorrichtung ein Komfort erhöht.

Der Untergrund kann ein Muster aufweisen. Das Muster kann aus einer Mehrzahl von sich periodisch wiederholender Strukturen gebildet sein. Jede Struktur kann eine Strukturbreite aufweisen. Zwei benachbarte Strukturen können mit einem Strukturabstand voneinander beabstandet sein. Der Strukturabstand kann derart ausgebildet sein, dass ein Laufrad einer nur das Laufrad aufweisenden Rollenvorrichtung mit mindestens 5%, insbesondere 10% oder 20%, einer Höhe, insbesondere der niedrigsten Struktur, der beiden benachbarten Strukturen zwischen den beiden benachbarten Strukturen eintauchen kann.

Der Untergrund kann geriffelte Platten, vorzugsweise geriffelte Aluminiumplatten, und/oder Gitterelemente aufweisen. Das Muster kann eine Riffelung der geriffelten Platten oder ein Gitter der Gitterelemente sein. Die Struktur kann ein einziges Riffel der Riffelung oder ein einziger Durchbruch des Gitters sein. Das einzige Riffel kann mehrere Vorsprünge umfassen. Der Strukturabstand kann ein Abstand zwischen benachbarter Riffel oder Durchbrüche sein.

Die Radhalterung kann eine Radgabel für das Laufrad umfassen. Das Laufrad kann von der Radgabel für das Laufrad um die Laufradachse drehbar gehalten sein. Die Radhalterung kann eine Radgabel für das Stützrad umfassen. Das Stützrad kann von der Radgabel für das Stützrad um die Stützradachse drehbar gehalten sein. Die Radhalterung kann einteilig ausgeführt sein. Alternativ kann die Radhalterung mehrere voneinander getrennte Bauteile umfassen. Erfindungsgemäß hält die Radhalterung das Laufrad und das Stützrad derart, dass die Laufradachse und die Stützradachse relativ zueinander festgelegt sind. Unter die Laufradachse und die Stützradachse sind relativ zueinander festgelegt kann verstanden werden, dass beim Rollen der Rollenvorrichtung über einen Untergrund eine Position und/oder eine Lage der Laufradachse und eine Position und/oder eine Lage der Stützradachse relativ zueinander unveränderlich sind.

Die Radhalterung kann dazu ausgebildet sein, einen Abstand zwischen einer mit der Rollenvorrichtung verbundenen Patientenaufnahme und der Laufradachse und einen Abstand zwischen der mit der Rollenvorrichtung verbundenen Patientenaufnahme und der Stützradachse während des Rollens der Rollenvorrichtung konstant zu halten.

Die Verbindung zwischen der Radhalterung und der Patientenaufnahme kann mittels einer Schraubverbindung, einer formschlüssigen Verbindung und/oder einer kraftschlüssigen Verbindung hergestellt werden. Die Rollenvorrichtung kann einen, insbesondere zylinderförmigen oder quaderförmigen, Zapfen zum Verbinden der Radhalterung mit der Patientenaufnahme aufweisen. Der Zapfen kann an der Radhalterung angeordnet sein. Der Zapfen kann für das Herstellen der Schraubverbindung, der formschlüssigen Verbindung und/oder der kraftschlüssigen Verbindung, insbesondere mit der Patientenaufnahme, ausgebildet sein.

Die Rollenvorrichtung kann ein Drehlager aufweisen. Das Drehlager kann an der Radhalterung angeordnet sein. Das Drehlager kann zwischen dem Zapfen und der Laufradachse und/oder der Stützradachse angeordnet sein. Die Radhalterung kann mittels des Drehlagers um die Schwenkachse drehbar sein. Mittels des Drehlagers können die Laufradachse und die Stützradachse um die Schwenkachse gedreht werden, insbesondere können die Laufradachse und die Stützradachse relativ zu einer mit der Rollenvorrichtung verbundenen Patientenaufnahme um die Schwenkachse gedreht werden.

Die Schwenkachse kann eine vertikale Schwenkachse sein. Die Schwenkachse kann senkrecht zu einer Rollrichtung angeordnet sein. Die Rollrichtung kann eine Richtung sein, in welche die Rollenvorrichtung gerollt werden kann. Insbesondere kann die Rollrichtung eine Richtung sein, in welche eine mit der Rollenvorrichtung ausgestatteten Patiententransportvorrichtung gerollt werden kann. Zusätzlich oder alternativ kann die Schwenkachse senkrecht zu der Laufradachse und der Stützradachse angeordnet sein.

Das Stützrad kann mit einem Abstand, insbesondere in Richtung der Laufradachse, von dem Laufrad beabstandet sein. Der Abstand kann parallel zu der Laufradachse ermittelt werden. Der Abstand kann beispielsweise 0,5 cm bis 6 cm, insbesondere 1 cm bis 3 cm, betragen. Die Abkürzung cm kann die Einheit Zentimeter bezeichnen.

Die Rollenvorrichtung kann ein Gehäuse, insbesondere eine Abdeckung, aufweisen. Das Gehäuse kann eine erste Gehäusehälfte und eine zweite Gehäusehälfte umfassen. Die erste Gehäusehälfte kann mittels einer Schraubverbindung oder einer Rastverbindung mit der zweiten Gehäusehälfte verbunden sein. Das Gehäuse kann die Radhalterung zumindest teilweise oder vollständig überdecken. Eine Teilungsebene des Gehäuses kann parallel zu dem Laufrad sein. Vorteilhafterweise kann das Gehäuse verhindern, dass Schmutz zu der Laufradachse und/oder zu der Stützradachse gelangt.

In einer Weiterbildung der Rollenvorrichtung definiert das Laufrad und das Stützrad eine Rollebene. Die Rollebene kann eine Tangentialebene, insbesondere einer Lauffläche, des Laufrads und, insbesondere einer Lauffläche, des Stützrads sein. Die Rollebene kann eine horizontale Rollebene sein. Die Rollebene kann parallel zu einem, insbesondere ebenen, Untergrund sein, insbesondere beim Rollen der Rollenvorrichtung über den, insbesondere ebenen, Untergrund. Der, insbesondere ebene, Untergrund kann innerhalb der Rollebene liegen, insbesondere beim Rollen der Rollenvorrichtung über den, insbesondere ebenen, Untergrund. Die Rollebene kann parallel und versetzt zu der Laufradachse und der Stützradachse sein. Die Rollebene kann senkrecht zu der Schwenkachse und/oder einer Längsachse des Zapfens sein.

Erfindungsgemäß ist ein Drehachsenabstand zwischen der Laufradachse und der Stützradachse gleich oder kleiner als die Summe aus einem Radius des Laufrads und einem Radius des Stützrads. Für den Drehachsenabstand gilt die Formel: DA ≤ RL + RS, wobei DA den Drehachsenabstand, RL den Radius des Laufrads und RS den Radius des Stützrads beschreibt.

In einer Weiterbildung der Rollenvorrichtung ist der Drehachsenabstand zwischen der Laufradachse und der Stützradachse kleiner als ein Radius des Laufrads und/oder kleiner als ein Radius des Stützrads. Vorteilhafterweise ergibt sich dadurch eine besonders kompakte Bauweise der Rollenvorrichtung.

Erfindungsgemäß weist die Radhalterung eine Laufradhalterung und eine Stützradhalterung auf. Das Laufrad ist von der Laufradhalterung um die Laufradachse drehbar gehalten. Das Stützrad ist von der Stützradhalterung um die Stützradachse drehbar gehalten. Die Laufradhalterung und die Stützradhalterung sind lösbar miteinander verbunden. Vorteilhafterweise ermöglicht das lösbare Verbinden ein Nachrüsten des Stützrads an einer bestehenden Rollenvorrichtung, die nur das Laufrad umfasst.

Die Laufradhalterung kann eine Radgabel für das Laufrad umfassen. Das Laufrad kann von der Radgabel für das Laufrad um die Laufradachse drehbar gehalten sein. Die Stützradhalterung kann eine Radgabel für das Stützrad umfassen. Das Stützrad kann von der Radgabel für das Stützrad um die Stützradachse drehbar gehalten sein. Die Rollenvorrichtung kann eine Befestigungseinrichtung zum lösbaren Verbinden der Laufradhalterung und der Stützradhalterung miteinander umfassen. Die Befestigungseinrichtung kann dazu ausgebildet sein, eine Schraubverbindung, eine formschlüssige Verbindung und/oder eine kraftschlüssige Verbindung zum lösbaren Verbinden der Laufradhalterung mit der Stützradhalterung herzustellen.

In einer Weiterbildung der Rollenvorrichtung weist der Untergrund ein Muster auf. Das Muster ist aus einer Mehrzahl von sich periodisch wiederholender Strukturen gebildet. Jede Struktur weist eine Strukturbreite auf und zwei benachbarte Strukturen sind mit einem Strukturabstand voneinander beabstandet. Ein horizontaler Drehachsenabstand zwischen der Laufradachse und der Stützradachse ist gleich oder größer als die Strukturbreite und gleich oder kleiner als der Strukturabstand, wenn die Strukturbreite gleich oder kleiner als der Strukturabstand ist. Alternativ ist ein horizontaler Drehachsenabstand zwischen der Laufradachse und der Stützradachse gleich oder kleiner als die Strukturbreite und gleich oder größer als der Strukturabstand, wenn die Strukturbreite größer als der Strukturabstand ist. Alternativ oder Zusätzlich beträgt der horizontaler Drehachsenabstand 95% bis 110%, insbesondere 98% bis 106% eines Werts, der sich aus einem Drittel einer Summe aus dem Strukturabstand und dem Doppelten der Strukturbreite berechnet.

Der Strukturabstand kann für alle benachbarten Strukturen des Musters gleich sein. Der Drehachsenabstand kann in den horizontalen Drehachsenabstand und in einen vertikalen Drehachsenabstand zerlegt werden. Der horizontale Drehachsenabstand und der vertikale Drehachsenabstand können orthogonal zueinander ermittelt werden. Der horizontale Drehachsenabstand kann parallel zu der Rollrichtung ermittelt werden. Der horizontale Drehachsenabstand kann senkrecht zu der Schwenkachse ermittelt werden. Der horizontale Drehachsenabstand kann senkrecht zu der Laufradachse und/oder zu der Stützradachse ermittelt werden. Der horizontale Drehachsenabstand kann parallel zu der Rollebene ermittelt werden.

Für den Wert, der sich aus einem Drittel einer Summe aus dem Strukturabstand und dem Doppelten der Strukturbreite berechnet, kann die Formel gelten: WT = (SA + 2*SB) / 3, wobei WT den Wert, SA den Strukturabstand und SB die Strukturbreite beschreibt.

Der horizontale Drehachsenabstand kann derart auf das Muster abgestimmt sein, dass beim Rollen der Rollenvorrichtung über den Untergrund das Laufrad und/oder das Stützrad mit mindestens einer von zwei benachbarten Strukturen in Kontakt ist. Der horizontale Drehachsenabstand kann derart auf das Muster abgestimmt sein, dass das Laufrad und/oder das Stützrad mit höchstens 20%, insbesondere 10% oder 5%, einer Höhe, insbesondere der niedrigsten Struktur, von zwei benachbarten Strukturen zwischen den zwei benachbarten Strukturen eintauchen kann.

In einer Weiterbildung der Rollenvorrichtung weist die Rollenvorrichtung ein weiteres Stützrad auf, das von der Radhalterung um eine weitere Stützradachse drehbar gehalten ist. Die weitere Stützradachse kann parallel und versetzt zu der Stützradachse sein. Die weitere Stützradachse und die Stützradachse können gleich sein, insbesondere kann die weitere Stützradachse die Stützradachse sein. Das weitere Stützrad und das Stützrad können gleich ausgebildet, insbesondere baugleich, sein. Das weitere Stützrad kann alle oder einige zuvor beschriebene Merkmale des Stützrads aufweisen. Deshalb kann die vorstehende Beschreibung des Stützrads ganz oder teilweise korrespondierend für das weitere Stützrad gelten.

In einer Weiterbildung der Rollenvorrichtung ist das Laufrad zwischen dem Stützrad und dem weiteren Stützrad angeordnet ist. Das Laufrad kann mittig zwischen dem Stützrad und dem weiteren Stützrad angeordnet sein. Das weitere Stützrad kann mit einem weiteren Abstand von dem Laufrad beabstandet sein. Der weitere Abstand kann parallel zu der Laufradachse ermittelt werden. Der weitere Abstand kann beispielsweise 0,5 cm bis 6 cm, insbesondere 1 cm bis 3 cm, betragen. Eine Summe aus dem Abstand zwischen dem Laufrad und dem Stützrad, einer Laufradbreite des Laufrads und dem weiteren Abstand zwischen dem Laufrad und dem weiteren Stützrad kann gleich oder größer sein als der Strukturabstand und/oder kann gleich oder kleiner sein als eine Summe aus Strukturabstand und der doppelten Strukturbreite. Es kann folgende Beziehung gelten: ALS + LB + ALWS ≤ SA + 2*SB und/oder ALS + LB + ALWS ≥ SA, wobei ALS den Abstand zwischen dem Laufrad und dem Stützrad, LB die Laufradbreite, ALWS den weiteren Abstand zwischen dem Laufrad und dem weiteren Stützrad, SA den Strukturabstand und SB die Strukturbreite beschreibt.

Eine erfindungsgemäße Patiententransportvorrichtung zum Transportieren eines Patienten weist eine Patientenaufnahme zum Aufnehmen des Patienten und mindestens eine zuvor beschriebene Rollenvorrichtung auf. Die Radhalterung ist mit der Patientenaufnahme drehbar um die Schwenkachse oder fest verbunden. Die Patiententransportvorrichtung kann vier, sechs oder acht Rollenvorrichtungen aufweisen. Die Rollenvorrichtungen können an einer Ecke oder innerhalb eines Eckbereichs der Patientenaufnahme angeordnet sein.

Ein erfindungsgemäßes Rollensystem weist ein Untergrund mit einem Muster auf. Das Muster ist aus einer Mehrzahl von sich periodisch wiederholender Strukturen gebildet. Jede Struktur weist eine Strukturbreite auf und zwei benachbarte Strukturen sind mit einem Strukturabstand voneinander beabstandet. Weiter umfasst das Rollensystem eine zuvor beschriebene Rollenvorrichtung oder eine zuvor beschriebene Patiententransportvorrichtung.

Weitere Vorteile und vorteilhafte Ausgestaltungen der Erfindung sind den nachfolgenden Zeichnungen, deren Beschreibung und den Patentansprüchen entnehmbar. Alle in den Zeichnungen, deren Beschreibung und den Patentansprüchen offenbarten Merkmale können sowohl einzeln als auch in beliebiger Kombination miteinander erfindungswesentlich sein. Es zeigen:
Fig. 1 eine schematische Darstellung einer bekannten Rollenvorrichtung beim Rollen über einen Untergrund,
Fig. 2 eine schematische Seitenansicht einer erfindungsgemäßen Rollenvorrichtung,
Fig. 3 eine schematische Schrägansicht der Rollenvorrichtung von Fig. 2,
Fig. 4 eine schematische Rückansicht der Rollenvorrichtung von Fig. 2,
Fig. 5 bis 8 eine schematische Darstellung der Rollenvorrichtung von Fig. 2 beim Rollen über den Untergrund,
Fig. 9 eine weitere schematische Darstellung der Rollenvorrichtung von Fig. 2 beim Rollen über den Untergrund in eine von Fig. 5 bis 8 unterschiedliche Rollrichtung, und
Fig. 10 eine schematische Darstellung der Rollenvorrichtung mit einem Gehäuse.

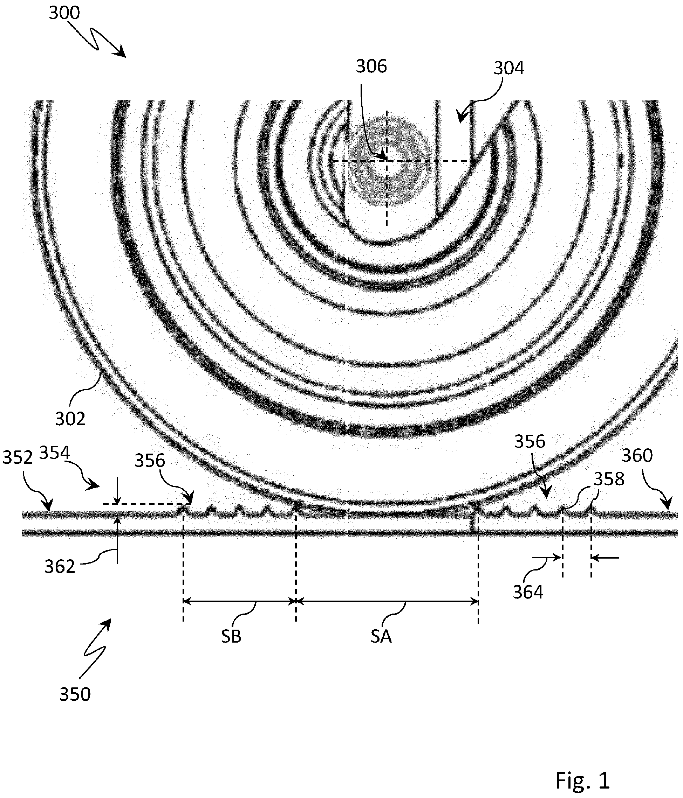

Fig. 1 zeigt eine bekannte Rollenvorrichtung 300 einer nicht dargestellten Patiententransportvorrichtung beim Rollen über einen Untergrund 350. Die Patiententransportvorrichtung ist ein Scherenhubtisch und hat eine nicht dargestellte Patientenaufnahme in Form einer Liegefläche. Die Rollenvorrichtung 300 umfasst ein Laufrad 302, das mit einer Radhalterung 304 in Form einer Radgabel um eine Laufradachse 306 drehbar gehalten ist. Die Radhalterung 304 ist an der Patientenaufnahme befestigt.

Der Untergrund 350 ist ein für Hubschrauberlandeplätze von Kliniken oder Schiffen typischer Untergrund. Der Untergrund 350 umfasst eine Mehrzahl von geriffelten Aluminiumplatten 352, die aneinandergereiht sind. Die Riffelung der Aluminiumplatten verhindern bei Nässe ein Rutschen. Dadurch kann die Patiententransportvorrichtung kontrolliert über den Untergrund gerollt werden.

Die geriffelten Aluminiumplatten 352 haben ein Muster 354 in Form der Riffelung der geriffelten Aluminiumplatten 352. Das Muster 354 ist aus einer Mehrzahl von sich periodisch wiederholender Strukturen 356 in Form von einzelner Riffel der Riffelung gebildet. Jedes Riffel 356 umfasst mehrere Vorsprünge 358. Die Vorsprünge 358 erstrecken sich von einem Grund 360 des Untergrunds 350 in Richtung der Patiententransportvorrichtung mit einer Höhe 362. Benachbarte Vorsprünge 358 eines Riffels 356 haben einen Abstand 364 zueinander. Jedes Riffel 356 hat eine Strukturbreite SB. Zwei benachbarte Riffel 356 sind mit einem Strukturabstand SA voneinander beabstandet.

Fig. 1 zeigt, dass der Strukturabstand SA derart ausgebildet ist, dass das Laufrad 302 in einen Zwischenraum zwischen zwei benachbarter Riffel 356 mit 100% der Höhe 362 der Vorsprünge 358 eintaucht. Daher kontaktiert das Laufrad 302 den Grund 360.

Beim Rollen der Rollenvorrichtung 300 über den Untergrund 350 rollt das Laufrad 302 über ein Riffel 356 der geriffelten Aluminiumplatten 352. Da das Laufrad 302 beim Rollen über ein Riffel 356 weniger als 5% der Höhe 362 der Vorsprünge 358 in das Riffel 356 eintaucht, ist der Abstand 364 der benachbarten Vorsprünge 358 eines Riffels 356 kein Strukturabstand und die Vorsprünge 358 sind keine Strukturen. Anders formuliert: Da das Laufrad 302 beim Rollen über ein Riffel 356 weniger als 5% der Höhe 362 der Vorsprünge 358 in einen Zwischenraum zwischen benachbarter Vorsprünge 358 eines Riffels 356 eintaucht, ist der Abstand 364 der benachbarten Vorsprünge 358 eines Riffels 356 kein Strukturabstand und die Vorsprünge 358 sind keine Strukturen. Anschließend taucht das Laufrad 302 in den Zwischenraum zwischen zwei benachbarter Riffel 356 derart ein, dass das Laufrad 302 den Grund 360 kontaktiert. Danach rollt das Laufrad 302 über ein weiteres Riffel 356. Dabei entstehen Stöße, die auf die Patientenaufnahme und damit auf einen mit der Patientenaufnahme aufgenommenen Patienten übertragen werden.

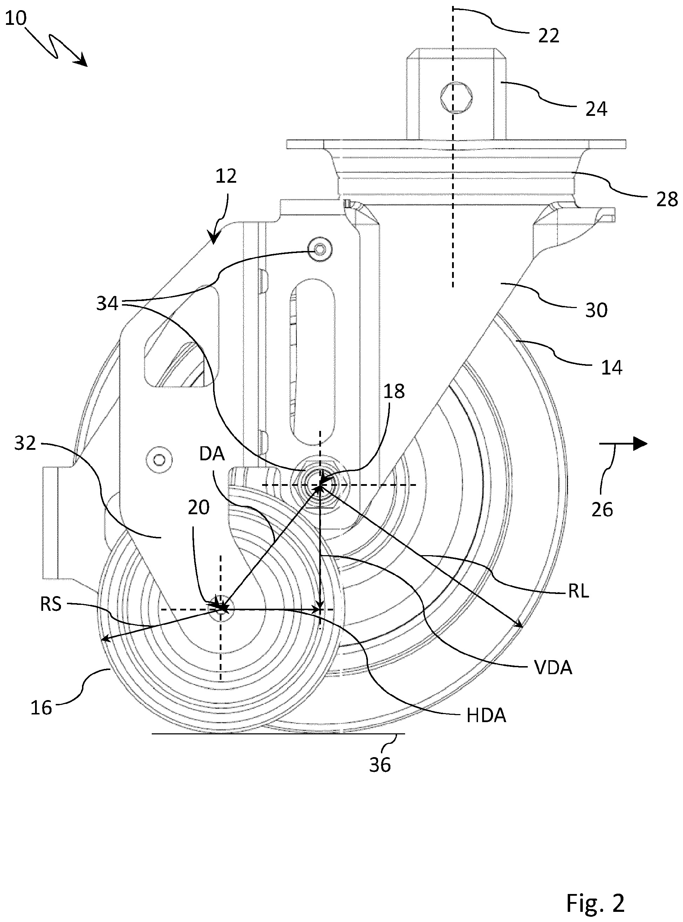

Fig. 2 zeigt eine erfindungsgemäße Rollenvorrichtung 10 für eine Patiententransportvorrichtung mit einer Patientenaufnahme zum Rollen der Patiententransportvorrichtung über einen Untergrund.

Die Rollenvorrichtung 10 hat eine Radhalterung 12, ein Laufrad 14 und ein Stützrad 16. Das Laufrad 14 ist von der Radhalterung 12 um eine Laufradachse 18 drehbar gehalten. Das Stützrad 16 ist von der Radhalterung 12 um eine Stützradachse 20 drehbar gehalten. Die Radhalterung 12 hält das Laufrad 14 und das Stützrad 16 derart, dass die Laufradachse 18 und die Stützradachse 20 relativ zueinander festgelegt sind. Die Laufradachse 18 und die Stützradachse 20 sind parallel und versetzt zueinander angeordnet. Beim Rollen der Rollenvorrichtung 10 über einen Untergrund dreht sich das Laufrad 14 um die Laufradachse 18 und das Stützrad 16 um die Stützradachse 20, wenn das Laufrad 14 und das Stützrad 16 den Untergrund kontaktieren.

Beim Rollen der Rollenvorrichtung 10 über einen Untergrund wird durch die Radhalterung 12 ein Abstand zwischen der Patientenaufnahme und der Laufradachse 18 und einen Abstand zwischen der Patientenaufnahme und der Stützradachse 20 konstant gehalten.

Die Radhalterung 12 ist um eine Schwenkachse 22 drehbar mit der Patientenaufnahme verbindbar. Die Verbindung zwischen der Rollenvorrichtung 10 und der Patientenaufnahme wird mittels einer Schraubverbindung hergestellt. Hierzu hat die Rollenvorrichtung 10 einen quaderförmigen Zapfen 24, der in eine korrespondierende Aufnahme der Patientenaufnahme eingesteckt und mittels einer Schraube innerhalb der Aufnahme fixiert wird.

Die Rollenvorrichtung 10 hat ein Drehlager 28. Das Drehlager 28 ist zwischen dem Zapfen 24 und der Laufradachse 18 und zwischen dem Zapfen 24 und der Stützradachse 20 angeordnet. Mittels des Drehlagers 18 ist die Radhalterung 12 drehbar mit der Patientenaufnahme verbindbar, so dass die Laufradachse 18 und die Stützradachse 20 um die Schwenkachse 22 drehbar sind.

Die Schwenkachse 22 ist eine vertikale Schwenkachse. Die Schwenkachse 22 ist senkrecht zu einer Rollrichtung 26. Die Rollrichtung 26 ist eine Richtung, in welche eine mit der Rollenvorrichtung 10 ausgestatteten Patiententransportvorrichtung gerollt wird. Die Schwenkachse 22 ist senkrecht zu der Laufradachse 18 und der Stützradachse 20.

Die Radhalterung 12 hat eine Radgabel 30 für das Laufrad 14 und eine Radgabel 32 für das Stützrad 16. Das Laufrad 14 ist von der Radgabel 30 für das Laufrad 14 um die Laufradachse 18 drehbar gehalten. Das Stützrad 16 ist von der Radgabel 30 für das Stützrad 16 um die Stützradachse 20 drehbar gehalten. Die Radgabel 30 für das Laufrad 14 und die Radgabel 32 für das Stützrad 16 sind als voneinander getrennte Bauteile ausgebildet. Die Rollenvorrichtung 10 hat Befestigungselemente 34 in Form von Schrauben, welche die Radgabel 30 für das Laufrad 14 und die Radgabel 32 für das Stützrad 16 miteinander, insbesondere mittels einer Schraubverbindung, verbinden.

Das Laufrad 14 und das Stützrad 16 definieren eine Rollebene 36. Die Rollebene 36 ist eine Tangentialebene bezogen auf eine Lauffläche des Laufrads 14 und bezogen auf eine Lauffläche des Stützrads 16. Die Rollebene 36 ist eine horizontale Ebene. Die Rollebene 36 verläuft parallel zu einem ebenen Untergrund, wenn die Rollenvorrichtung 10 über den ebenen Untergrund rollt. Beim Rollen der Rollenvorrichtung 10 über den ebenen Untergrund, liegt der ebene Untergrund innerhalb der Rollebene 36. Die Rollebene 36 ist parallel und versetzt zu der Laufradachse 18 und der Stützradachse 20. Die Rollebene 36 ist senkrecht zu der Schwenkachse 22.

Ein Drehachsenabstand DA zwischen der Laufradachse 18 und der Stützradachse 20 ist kleiner als die Summe aus einem Radius RL des Laufrads 14 und einem Radius RS des Stützrads 16. Für den Drehachsenabstand DA gilt die Formel: DA ≤ RL + RS. Zusätzlich ist der Drehachsenabstand DA kleiner als der Radius RL des Laufrads 14.

Der Drehachsenabstand DA ist in einen horizontalen Drehachsenabstand HDA und in einen vertikalen Drehachsenabstand VDA zerlegbar. Der horizontale Drehachsenabstand HDA und der vertikale Drehachsenabstand VDA sind orthogonal zueinander zu ermitteln. Der horizontale Drehachsenabstand HDA ist parallel zu der Rollrichtung 26, senkrecht zu der Schwenkachse 22, senkrecht zu der Laufradachse 18, senkrecht zu der Stützradachse 20 und parallel zu der Rollebene 36 zu ermitteln.

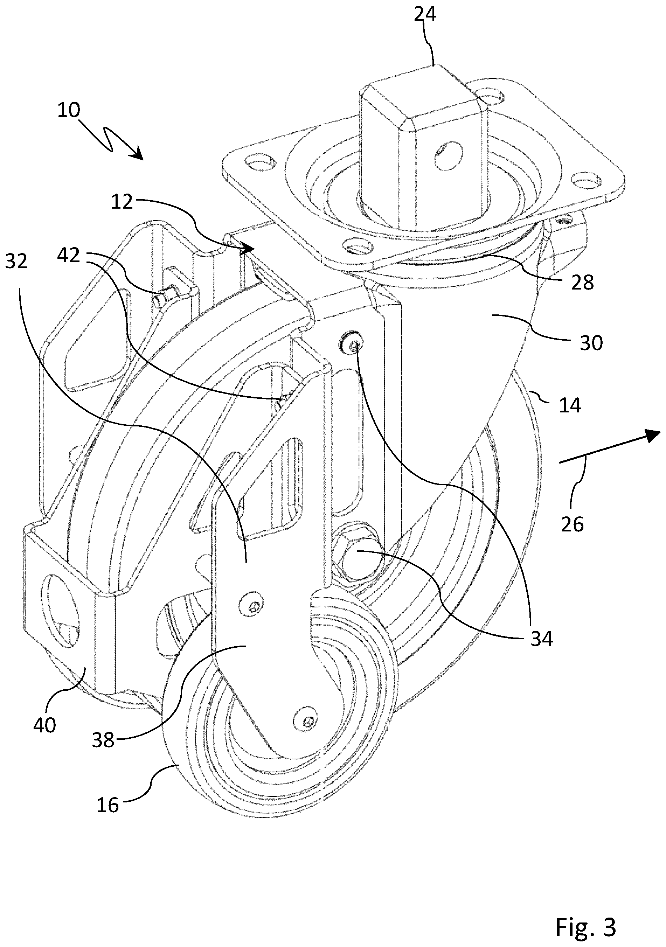

Fig. 3 zeigt die Rollenvorrichtung 10 in einer Schrägansicht. In Fig. 3 ist zu erkennen, dass die Radgabel 32 für das Stützrad 16 ein Biegeteil ist. Die Radgabel 32 für das Stützrad 16 umfasst ein erstes gebogenes Blech 38 und ein zweites gebogenes Blech 40. Das erste gebogene Blech 38 ist mit dem zweiten gebogene Blech 40 mittels einer Schraubverbindung 42 miteinander verbunden.

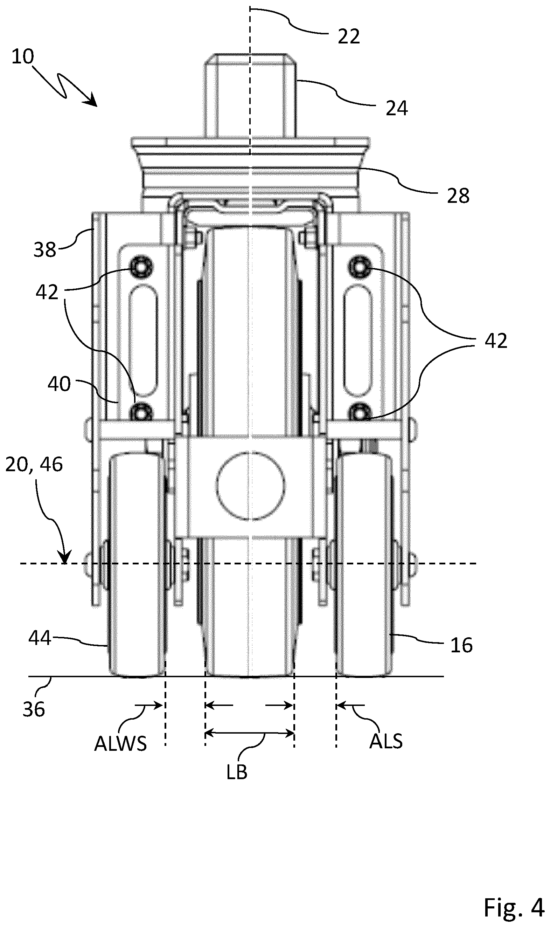

Fig. 4 zeigt die Rollenvorrichtung 10 von einer Rückseite. Das Laufrad 14 hat eine Laufradbreite LB. Die Laufradbreite LB ist in Richtung der Laufradachse 18 zu ermitteln. Das Stützrad 16 ist mit einem Abstand ALS von dem Laufrad 14 beabstandet.

Die Rollenvorrichtung 10 hat ein weiteres Stützrad 44, das von der Radhalterung 12 um eine weitere Stützradachse 46 drehbar gehalten ist. Die weitere Stützradachse 46 und die Stützradachse 20 sind gleich, insbesondere ist ein Verlauf der weiteren Stützradachse 46 und ein Verlauf der Stützradachse 20 identisch. Das weitere Stützrad 44 und das Stützrad 16 sind baugleich.

Das Laufrad 14 ist mittig zwischen dem Stützrad 16 und dem weiteren Stützrad 44 angeordnet. Das weitere Stützrad 44 ist mit einem weiteren Abstand ALWS von dem Laufrad 14 beabstandet.

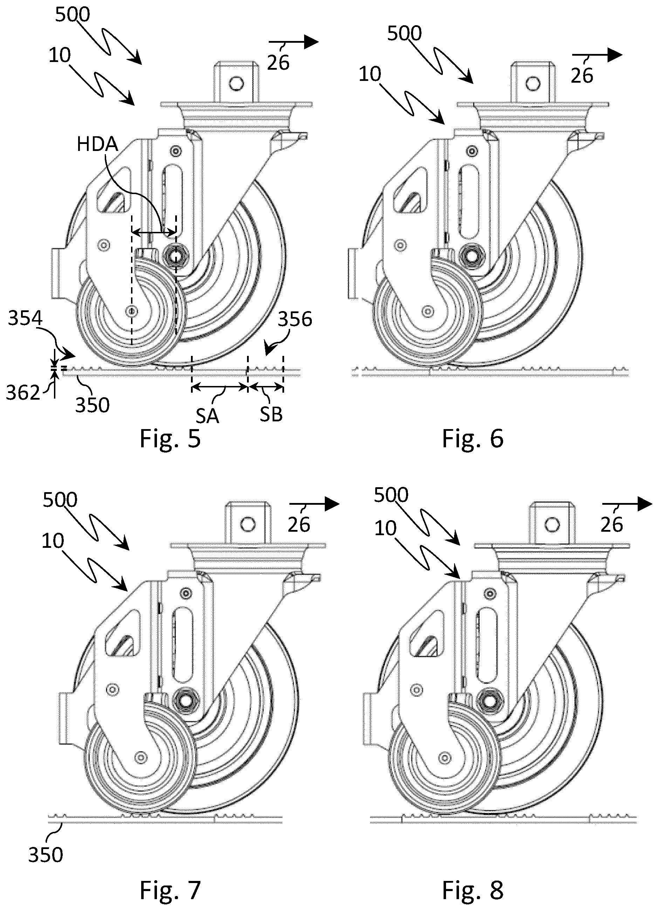

Fig. 5 bis 9 zeigen ein Rollensystem 500, das den Untergrund 350 und die Rollenvorrichtung 10 umfasst.

Fig. 5 bis 8 zeigen die Rollenvorrichtung 10 beim Rollen in Rollrichtung 26 über den Untergrund 350 von Fig. **1****.** Die Rollenvorrichtung 10 rollt senkrecht zu einer Erstreckung der Vorsprünge 358. Der horizontale Drehachsenabstand HDA ist derart auf das Muster 354 abgestimmt, dass beim Rollen der Rollenvorrichtung 10 über den Untergrund 350 zumindest das Laufrad 14 oder das Stützrad 16 mit mindestens einer von zwei benachbarten Strukturen 356 in Kontakt ist.

Die Strukturbreite SB ist kleiner als der Strukturabstand SA. Der horizontaler Drehachsenabstand HDA ist größer als die Strukturbreite SB und kleiner als der Strukturabstand SA. Der horizontaler Drehachsenabstand HDA hat einen Wert WT, der sich aus einem Drittel einer Summe aus dem Strukturabstand SA und dem Doppelten der Strukturbreite SB berechnet. Der Wert WT des horizontalen Drehachsenabstands HDA berechnet sich nach: WT = (SA + 2*SB) / **3.**

Mit einem derartigen horizontalen Drehachsenabstand HDA wird ein Eintauchen des Laufrads 14, des Stützrads 16 und des Weiteren Stützrads 44 zwischen zwei benachbarter Riffel 356 des Untergrunds 350 vermieden. Dies verdeutlichen die Fig. 5 bis 8.

In Fig. 5 ist das Laufrad 14 in Kontakt mit einem der Riffel 356. Das Stützrad 16 ist nicht mit dem Riffel 356 in Kontakt. Das Stützrad 16 kann höchstens bis zu 4% der Höhe 362 der Vorsprünge 358 zwischen zwei benachbarter Riffel 356 eintauchen, da die Radhalterung 12 das Laufrad 14 und das Stützrad 16 derart hält, dass die Laufradachse 18 und die Stützradachse 20 relativ zueinander festgelegt sind.

In Fig. 6 ist das Laufrad 14 und das Stützrad 16 in Kontakt mit dem Riffel 356.

In Fig. 7 ist das Stützrad 16 in Kontakt mit dem der Riffel 356. Das Laufrad 14 ist nicht mit dem Riffel 356 in Kontakt. Das Laufrad 14 kann höchstens bis zu 4% der Höhe 362 der Vorsprünge 358 zwischen zwei benachbarter Riffel 356 eintauchen, da die Radhalterung 12 das Laufrad 14 und das Stützrad 16 derart hält, dass die Laufradachse 18 und die Stützradachse 20 relativ zueinander festgelegt sind.

In Fig. 8 ist das Stützrad 16 in Kontakt mit dem Riffel 356 und das Laufrad 14 ist in Kontakt mit einem zu dem Riffel 356 benachbarten Riffel 356.

Die Beschreibung der Fig. 5 bis 8 hinsichtlich des Stützrads 16 gilt entsprechend für das weitere Stützrad 44.

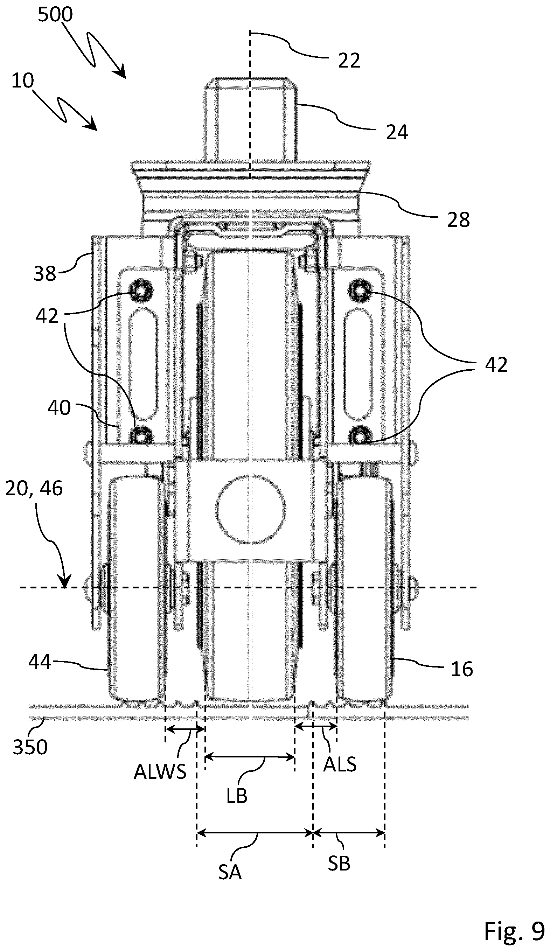

Fig. 9 zeigt die Rollenvorrichtung 10 beim Rollen über den Untergrund 350. Im Unterschied zu den Figuren 5 bis 8 rollt die Rollenvorrichtung 10 in eine um 90° um die Schwenkachse 22 gedrehte Rollrichtung 26. Dabei ist eine Rückseite der Rollenvorrichtung 10 erkennbar.

Eine Summe aus dem Abstand ALS zwischen dem Laufrad 14 und dem Stützrad 16, der Laufradbreite LB und dem weiteren Abstand ALWS zwischen dem Laufrad 14 und dem weiteren Stützrad 44 ist größer als der Strukturabstand SA und kleiner als eine Summe aus Strukturabstand SA und der doppelten Strukturbreite SB. Es gilt die Beziehung: ALS + LB + ALWS ≤ SA + 2*SB und ALS + LB + ALWS ≥ SA. Vorteilhafterweise wird durch eine derartige Anordnung des Laufrads 14, des Stützrads 16 und des Weiteren Stützrads 44 erreicht, dass keines der Räder 14, 16, 44 auch bei einer Änderung der Rollrichtung 26 zwischen zwei benachbarten Riffel 356 eintaucht. Dadurch wird das Entstehen von Stößen beim Rollen der Rollenvorrichtung 10 über den Untergrund 350 in einer beliebigen Rollrichtung 26 vermieden.

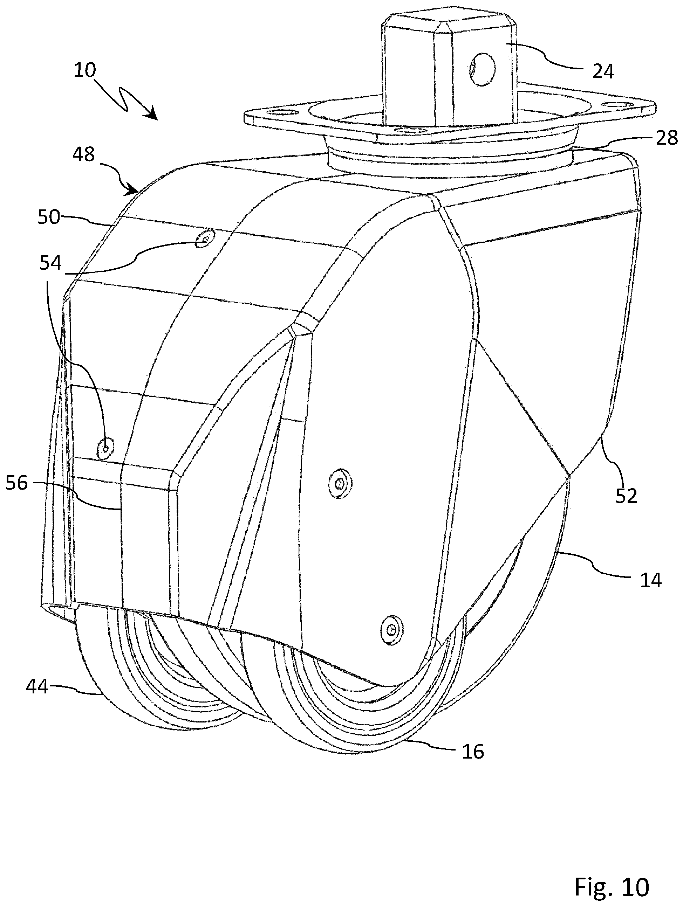

Fig. 10 zeigt die Rollenvorrichtung 10 mit einem Gehäuse 48. Das Gehäuse 48 umfasst eine erste Gehäusehälfte 50 und eine zweite Gehäusehälfte 52. Die erste Gehäusehälfte 50 ist mittels einer Schraubverbindung 54 mit der zweiten Gehäusehälfte 52 verbunden. Eine Teilungsebene 56 des Gehäuses verläuft parallel zu dem Laufrad. Das Gehäuse 48 überdeckt die Radhalterung vollständig und verhindert damit, dass Schmutz von außen zu der Radhalterung gelangt.

Eine nicht dargestellte erfindungsgemäße Patiententransportvorrichtung zum Transportieren eines Patienten weist eine Patientenaufnahme zum Aufnehmen des Patienten und mindestens eine zuvor beschriebene Rollenvorrichtung auf. Die Radhalterung ist mit der Patientenaufnahme drehbar um die Schwenkachse oder fest verbunden.

Wie die gezeigten und erläuterten Ausführungsbeispiele deutlich machen, stellt die Erfindung eine Rollenvorrichtung, eine Patiententransportvorrichtung und ein Rollensystem bereit, die beim Rollen der Rollenvorrichtung einen Komfort erhöhen.

## Patentansprüche

1. Rollenvorrichtung (10) für eine Patiententransportvorrichtung mit einer Patientenaufnahme zum Rollen der Patiententransportvorrichtung über einen Untergrund (350), die Rollenvorrichtung (10) aufweisend:
- eine Radhalterung (12), die um eine Schwenkachse (22) drehbar oder fest mit der Patientenaufnahme verbindbar ist,
- ein Laufrad (14), das von der Radhalterung (12) um eine Laufradachse (18) drehbar gehalten ist, und
- ein Stützrad (16), das von der Radhalterung (12) um eine Stützradachse (20) drehbar gehalten ist,
- wobei die Laufradachse (18) und die Stützradachse (20) parallel und versetzt zueinander angeordnet sind, wobei ein Drehachsenabstand (DA) zwischen der Laufradachse (18) und der Stützradachse (20) gleich oder kleiner als die Summe aus einem Radius (RL) des Laufrads (14) und einem Radius (RS) des Stützrads (16) ist,
wobei die Radhalterung (12) eine Laufradhalterung und eine Stützradhalterung aufweist, wobei das Laufrad (14) von der Laufradhalterung um die Laufradachse (18) drehbar gehalten ist, wobei das Stützrad (16) von der Stützradhalterung um die Stützradachse (20) drehbar gehalten ist, wobei die Laufradhalterung und die Stützradhalterung lösbar miteinander verbunden sind, wobei die Radhalterung (12) derart das Laufrad (14) und das Stützrad (16) hält, dass die Laufradachse (18) und die Stützradachse (20) relativ zueinander festgelegt sind.

2. Rollenvorrichtung (10) nach Anspruch 1,
- wobei das Laufrad (14) und das Stützrad (16) eine Rollebene (36) definieren.

3. Rollenvorrichtung (10) nach einem der vorhergehenden Ansprüche,
- wobei der Drehachsenabstand (DA) zwischen der Laufradachse (18) und der Stützradachse (20) kleiner als ein Radius (RL) des Laufrads (14) und/oder kleiner als ein Radius (RS) des Stützrads (16) ist.

4. Rollenvorrichtung (10) nach einem der vorhergehenden Ansprüche,
- wobei der Untergrund (350) ein Muster (354) aufweist,
- wobei das Muster (354) aus einer Mehrzahl von sich periodisch wiederholender Strukturen (356) gebildet ist,
- wobei jede Struktur (356) eine Strukturbreite (SB) aufweist und zwei benachbarte Strukturen (356) mit einem Strukturabstand (SA) voneinander beabstandet sind,
- wobei ein horizontaler Drehachsenabstand (HDA) zwischen der Laufradachse (18) und der Stützradachse (20) gleich oder größer als die Strukturbreite (SB) und gleich oder kleiner als der Strukturabstand (SA) ist, wenn die Strukturbreite (SB) gleich oder kleiner als der Strukturabstand (SA) ist, oder
- wobei ein horizontaler Drehachsenabstand (HDA) zwischen der Laufradachse (18) und der Stützradachse (20) gleich oder kleiner als die Strukturbreite (SB) und gleich oder größer als der Strukturabstand (SA) ist, wenn die Strukturbreite (SB) größer als der Strukturabstand (SA) ist, und/oder
- wobei der horizontaler Drehachsenabstand (HDA) 95% bis 110% eines Werts (WT) beträgt, der sich aus einem Drittel einer Summe aus dem Strukturabstand (SA) und dem Doppelten der Strukturbreite (SB) berechnet.

5. Rollenvorrichtung (10) nach einem der vorhergehenden Ansprüche,
- wobei die Rollenvorrichtung (10) ein weiteres Stützrad (16) aufweist, das von der Radhalterung (12) um eine weitere Stützradachse (20) drehbar gehalten ist.

6. Rollenvorrichtung (10) nach Anspruch 5,
- wobei das Laufrad (14) zwischen dem Stützrad (16) und dem weiteren Stützrad (16) angeordnet ist.

7. Rollenvorrichtung (10) nach einem der vorhergehenden Ansprüche, wobei die Rollenvorrichtung (10) ein Gehäuse (48) aufweist.

8. Patiententransportvorrichtung zum Transportieren eines Patienten, die Patiententransportvorrichtung aufweisend:
- eine Patientenaufnahme zum Aufnehmen des Patienten, und
- mindestens eine Rollenvorrichtung (10) nach einem der vorhergehenden Ansprüche,
- wobei die Radhalterung (12) mit der Patientenaufnahme drehbar um die Schwenkachse (22) oder fest verbunden ist.

9. Rollensystem (500), aufweisend:
- eine Rollenvorrichtung (10) nach einem der Ansprüche 1 bis 7 oder eine Patiententransportvorrichtung nach Anspruch 8, und den Untergrund (350).

## Claims

1. Roller device (10) for a patient transport device having a patient receiver for rolling the patient transport device over a surface (350), the roller device (10) comprising:
- a wheel holder (12) which can be rotated about a pivot axis (22) or fixedly connected to the patient receiver,
- a running wheel (14) which is held by the wheel holder (12) so as to be rotatable about a running wheel axle (18), and
- a support wheel (16) which is held by the wheel holder (12) so as to be rotatable about a support wheel axle (20),
- wherein the running wheel axle (18) and the support wheel axle (20) are arranged in parallel with and offset from one another, wherein a rotation axis distance (DA) between the running wheel axle (18) and the support wheel axle (20) is equal to or less than the sum of a radius (RL) of the running wheel (14) and a radius (RS) of the support wheel (16), wherein the wheel holder (12) comprises a running wheel holder and a support wheel holder, wherein the running wheel (14) is held by the running wheel holder so as to be rotatable about the running wheel axle (18), wherein the support wheel (16) is held by the support wheel holder so as to be rotatable about the support wheel axle (20), wherein the running wheel holder and the support wheel holder are detachably connected to one another, wherein the wheel holder (12) holds the running wheel (14) and the support wheel (16) such that the running wheel axle (18) and the support wheel axle (20) are fixed relative to one another.

2. Roller device (10) according to claim 1,
- wherein the running wheel (14) and the support wheel (16) define a rolling plane (36).

3. Roller device (10) according to either of the preceding claims,
- wherein the rotation axis distance (DA) between the running wheel axle (18) and the support wheel axle (20) is smaller than a radius (RL) of the running wheel (14) and/or smaller than a radius (RS) of the support wheel (16).

4. Roller device (10) according to any of the preceding claims,
- wherein the surface (350) has a pattern (354),
- wherein the pattern (354) is formed of a plurality of periodically repeating structures (356),
- wherein each structure (356) has a structure width (SB) and two adjacent structures (356) are spaced apart by a structure distance (SA),
- wherein a horizontal rotation axis distance (HDA) between the running wheel axle (18) and the support wheel axle (20) is equal to or greater than the structure width (SB) and equal to or smaller than the structure distance (SA) if the structure width (SB) is equal to or smaller than the structure distance (SA), or
- wherein a horizontal rotation axis distance (HDA) between the running wheel axle (18) and the support wheel axle (20) is equal to or smaller than the structure width (SB) and equal to or greater than the structure distance (SA) if the structure width (SB) is greater than the structure distance (SA), and/or
- wherein the horizontal rotation axis distance (HDA) is 95% to 110% of a value (WT) calculated as one third of a sum of the structure distance (SA) and twice the structure width (SB).

5. Roller device (10) according to any of the preceding claims,
- wherein the roller device (10) has a further support wheel (16) which is held by the wheel holder (12) so as to be rotatable about a further support wheel axle (20).

6. Roller device (10) according to claim 5,
- wherein the running wheel (14) is arranged between the support wheel (16) and the further support wheel (16).

7. Roller device (10) according to any of the preceding claims, wherein the roller device (10) has a housing (48).

8. Patient transport device for transporting a patient, the patient transport device comprising:
- a patient receiver for receiving the patient, and
- at least one roller device (10) according to any of the preceding claims,
- wherein the wheel holder (12) is connected to the patient receiver so as to be rotatable about the pivot axis (22) or fixedly connected to the patient receiver.

9. Roller system (500), comprising:
- a roller device (10) according to any of claims 1 to 7 or a patient transport device according to claim 8, and the surface (350).

## Revendications

1. Dispositif roulant (10) pour un dispositif de transport de patient comportant un logement pour patient permettant de faire rouler le dispositif de transport de patient sur un sol (350), le dispositif roulant (10) présentant:
- un dispositif de maintien de roue (12) qui peut tourner autour d'un axe de pivotement (22) ou qui peut être relié de manière fixe au logement pour patient,
- une roue mobile (14) qui est maintenue par le dispositif de maintien de roue (12) de manière à pouvoir tourner autour d'un axe de roue mobile (18), et
- une roue de support (16) qui est maintenue par le dispositif de maintien de roue (12) de manière à pouvoir tourner autour d'un axe de roue de support (20),
- dans lequel l'axe de roue mobile (18) et l'axe de roue de support (20) sont disposés de manière parallèle et décalée l'un par rapport à l'autre, dans lequel une distance d'axe de rotation (DA) entre l'axe de roue mobile (18) et l'axe de roue de support (20) est inférieure ou égale à la somme d'un rayon (RL) de la roue mobile (14) et d'un rayon (RS) de la roue de support (16), dans lequel le dispositif de maintien de roue (12) présente un dispositif de maintien de roue mobile et un dispositif de maintien de roue de support, dans lequel la roue mobile (14) est maintenue par le dispositif de maintien de roue mobile de manière à pouvoir tourner autour de l'axe de roue mobile (18), dans lequel la roue de support (16) est maintenue par le dispositif de maintien de roue de support de manière à pouvoir tourner autour de l'axe de roue de support (20), dans lequel le dispositif de maintien de roue mobile et le dispositif de maintien de roue de support sont reliés l'un à l'autre de manière amovible, dans lequel le dispositif de maintien de roue (12) maintient la roue mobile (14) et la roue de support (16) de telle sorte que l'axe de roue mobile (18) et l'axe de roue de support (20) sont fixés l'un par rapport à l'autre.

2. Dispositif roulant (10) selon la revendication 1,
- dans lequel la roue mobile (14) et la roue de support (16) définissent un plan de roulement (36).

3. Dispositif roulant (10) selon l'une des revendications précédentes,
- dans lequel la distance d'axe de rotation (DA) entre l'axe de roue mobile (18) et l'axe de roue de support (20) est inférieure à un rayon (RL) de la roue mobile (14) et/ou inférieure à un rayon (RS) de la roue de support (16).

4. Dispositif roulant (10) selon l'une des revendications précédentes,
- dans lequel le sol (350) présente un motif (354),
- dans lequel le motif (354) est formé à partir d'une pluralité de structures (356) se répétant périodiquement,
- dans lequel chaque structure (356) présente une largeur de structure (SB) et deux structures (356) adjacentes sont espacées l'une de l'autre d'une distance entre structures (SA),
- dans lequel une distance d'axe de rotation horizontale (HDA) entre l'axe de roue mobile (18) et l'axe de roue de support (20) est supérieure ou égale à la largeur de structure (SB) et inférieure ou égale à la distance entre structures (SA) lorsque la largeur de structure (SB) est inférieure ou égale à la distance entre structures (SA), ou
- dans lequel une distance d'axe de rotation horizontale (HDA) entre l'axe de roue mobile (18) et l'axe de roue de support (20) est inférieure ou égale à la largeur de structure (SB) et supérieure ou égale à la distance entre structures (SA) lorsque la largeur de structure (SB) est supérieure à la distance entre structures (SA), et/ou
- dans lequel la distance d'axe de rotation horizontale (HDA) va de 95 % à 110 % d'une valeur (WT) calculée à partir d'un tiers d'une somme de la distance entre structures (SA) et du double de la largeur de structure (SB).

5. Dispositif roulant (10) selon l'une des revendications précédentes,
- dans lequel le dispositif roulant (10) présente une autre roue de support (16) qui est maintenue par le dispositif de maintien de roue (12) de manière à pouvoir tourner autour d'un autre axe de roue de support (20).

6. Dispositif roulant (10) selon la revendication 5,
- dans lequel la roue mobile (14) est disposée entre la roue de support (16) et l'autre roue de support (16).

7. Dispositif roulant (10) selon l'une des revendications précédentes, dans lequel le dispositif roulant (10) présente un boîtier (48).

8. Dispositif de transport de patient permettant de transporter un patient, le dispositif de transport de patient présentant:
- un logement pour patient permettant de recevoir le patient, et
- au moins un dispositif roulant (10) selon l'une des revendications précédentes,
- dans lequel le dispositif de maintien de roue (12) est relié au logement pour patient de manière à pouvoir tourner autour de l'axe de pivotement (22) ou de manière fixe.

9. Système roulant (500), présentant:
- un dispositif roulant (10) selon l'une des revendications 1 à 7 ou un dispositif de transport de patient selon la revendication 8, et le sol (350).
